# EUROPEAN PATENT APPLICATION

(11) **EP 4 645 506 A1**
(43) Date of publication of application: **05.11.2025**
(21) Application number: 23913069.3
(22) Date of filing: 02.10.2023
(51) Int. Cl.: H01M 10/058, H01M 10/615, H01M 10/625, B60L 58/24

(54) **TRACTION BATTERY**

(30) Priority: 27.12.2022 RU 2022134660
(71) Applicant: Obshchestvo s Ogranichennoi Otvetstvennostiu "Evokargo", Moscow, 129085 (RU)
(72) Inventor: PYRKOVA, Anastasiya Borisovna, pgt. Afipskij, 353235 (RU); BUTOV, Lev Nikolaevich, Moscow, 115446 (RU); PYRKOV, Pavel Vladimirovich, Kuzneck, 442544 (RU); FEDICHEV, Ilya Mihajlovich, Moscow, 117513 (RU); POPPEL, Anton Dmitrievich, Moscow, 109125 (RU); KOLESNIKOV, Dmitrii Sergeevich, Moscow, 105037 (RU); SHIPITKO, Oleg Sergeevich, poselok Moskovskiy, 108811 (RU); BOLSHAKOV, Andrej Sergeevich, Moscow, 125363 (RU)
(74) Representative: Osmans, Voldemars
(86) International application number: PCT/RU2023/050232
(87) International publication number: WO 2024/144427

(57) **Abstract**

The invention relates to the field of accumulator design. A traction battery for highly automated self-driving vehicles comprises a housing having mounted therein in-series connected modules, a heating system comprised of heating mats arranged between said modules, and a control system. The modules are arranged in two tiers. Each module contains series-interconnected lithium-iron-phosphate-based rechargeable cells that are electrically isolated from one another. The control system consists of temperature sensors mounted on each module, a humidity sensor, voltage meters for each cell in a module, and a current sensor for a lower and an upper power module. The invention makes it possible to increase the nominal voltage and the range of working temperatures during discharge and to provide for safer maintenance of the traction battery.

## Description

### FIELD OF THE INVENTION

The invention relates to the field of electrical engineering, namely to traction batteries based on lithium-iron-phosphate cells for unmanned highly automated vehicles (HAV), designed for collecting and storing electrical energy, which is used to carry out movement, and power low-current on-board computers.

### BACKGROUND

Many different types of traction batteries with different chemical approaches to energy storing are known from the state of the art. The proposed traction battery based on lithium-iron-phosphate cells has several advantages over similar solutions.

A device is known (RU 137774 U1, B60H 1/00, published 27.02.2014), which is used to protect the vehicle battery from overcooling. It contains a heat-insulating housing, temperature sensors, a heater and a control unit, the output of which is connected to the heater's power supply circuit. The control unit includes a timer and a key, and the temperature sensor of the battery case is connected to the timer control input via the key.

The disadvantage of this solution is that an external power supply is required, which means that the process of heating the battery is limited by the technical condition of this unit, its charge and chemical composition.

A thermally protected lithium-ion rechargeable battery is known (RU 140037 U1, H01M10/44, published 27.04.2014), containing heating elements installed in the housings of battery modules, and series-connected electric energy storage devices with an integrated hierarchical electronic control system. The control system consists of temperature sensors and equalizing devices installed on energy storage units, which are interconnected and connected to the control unit via a bidirectional information communication channel, while the battery module control units contain electronic keys, connected to an end-to-end isolated DC power exchange line.

The disadvantages of this technical solution include the need to install electrical energy storage devices, which also requires additional control modules for data collection and analysis.

An automotive rechargeable battery (RU 2713618 C2, H01M10/653, published 05.02.2020) is known from prior art. It was adopted as a prototype, and the battery includes the battery module, which has several stacked battery cells, and, at least in one of the intermediate areas between two adjacent battery cells, there is a heat-conducting element (film or steel sheet).

The disadvantages of the prototype include the inability to quickly replace the battery cells, and the lack of sensors and control boards to regulate the temperature inside and outside the battery.

### SUMMARY

The proposed technical solution solves the task of creating a traction battery based on lithium-iron-phosphate cells for unmanned HAVs.

The technical result of the claimed invention is an increase in the rated voltage and operating temperature range during discharge, and the possibility of quick replacement of battery modules, and increased assembly integrity, repair and maintenance of a traction battery.

The claimed technical result is achieved due to the fact that the traction battery contains a housing with series-connected modules and a heating system formed by heating mats between the modules, while the modules in the housing are arranged in two tiers, and each module is formed by series-connected lithium-iron-phosphate battery cells, electrically isolated from each other; moreover, the housing contains a control system with temperature sensors on each module, humidity sensor, voltage meters of each cell in the module, current sensor, and upper and lower power modules.

The technical solutions used in the claimed battery allow to monitor and control the basic parameters of each cell and module. Serial connections of cells in modules and two-tier construction lead to an increase in the rated voltage, which is necessary to provide power to all vehicle systems.

### BRIEF DESCRIPTION OF DRAWINGS

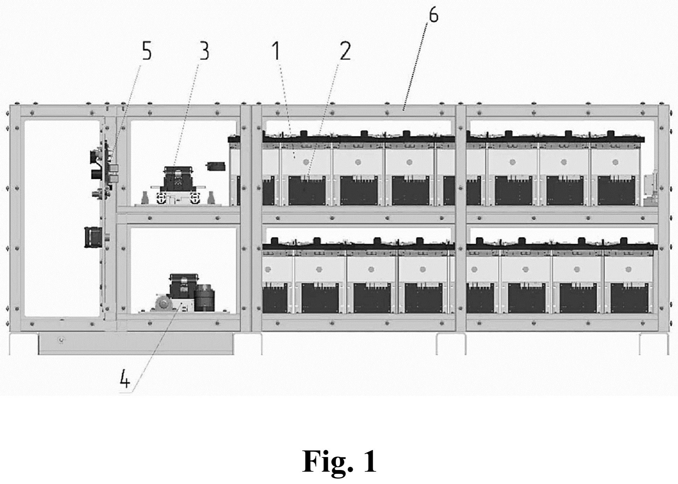

Figure 1 shows a model of a traction battery, where
1 is a traction battery
2 is a cell control board
3 is an upper power module
4 is a lower power module
5 is a controller central board
6 is a housing.

The housing consists of battery modules (1) installed in two tiers and connected in series, each of which contains 12 lithium-iron-phosphate battery cells, also connected in series. Each cell is connected to the control boards (2) via electrical contact; data from control boards is transmitted to the central board of the control module (5) to monitor the parameters (voltage, temperature, resistance, state of charge, etc.) of each cell. The cell control boards (2) are powered by energy obtained from the battery modules (1). The central board of the controller (5) is responsible for monitoring the battery charge level by collecting and analyzing information from each battery module (1). Electric shock protection system, short circuit protection system and humidity control system are also installed inside the battery. The upper power module (3) is used for the positive line contactor, and the lower power module (4) for the negative line contactor. Thus, the + and
- lines are separated from each other, making the battery safe to assembly, repair and maintain (no possibility of short circuit).

The battery includes a heating system for modules to charge the battery at subzero temperatures and prevent degradation of cells during charging at subzero temperatures. Temperature is recorded during discharge/charge via at least two temperature sensors in each battery module (1), which provides for more accurate temperature control. Values of all parameters (voltage, temperature, charge) are sent to the connected computer via web interface.

### DETAILED DESCRIPTION OF THE INVENTION

Cell condition monitoring is carried out using traction battery monitoring and control systems installed as part of the battery. To achieve optimal voltage and energy consumption during HAV operation, the battery is designed as follows: 12 lithium-iron-phosphate battery cells with a rated voltage of 3.2 V are combined into one module, 16 modules are installed in two tiers and connected sequentially (see Figure 1). Inside the battery there is a control module for tracking parameters (voltage, temperature, resistance, charge, etc.) of each cell in each of the 16 modules; electric shock protection system, short circuit protection system and humidity control system are also installed inside the housing. The 16 modules are arranged in two tiers and connected in series in order to increase the rated voltage. The traction battery has a heating system for modules (and, accordingly, cells) to charge batteries at subzero temperatures and prevent degradation of cells during charging at subzero temperatures. Inside the battery there are a humidity sensor, current, and voltage sensor, which provide extensive information about the battery. It ensures continuous integrity monitoring and preventing high voltage breakdown on the housing due to water ingress on high-voltage contacts.

Electric shock protection system works in conjunction with the battery tier control system. The upper and lower power modules are installed, while the upper module is used for positive line contactors, the lower power module for the negative line contactor (it allows for design optimization). Thus, the + and - lines are separated from each other, which avoids short circuits and increases the safety of battery assembly, repair and maintenance.

The assembled battery has the following characteristics: a rated voltage of 614 V and a capacity of 105 Ah. This design allows to charge each of the battery tiers simultaneously by an external DC power source. The advantage of this implementation is the self-balancing of each cell (the process occurs due to the equalization of potential on each cell), and the possibility of rapid replacement of battery modules. To track the parameters of each cell (voltage, temperature, current, charge, errors, capacity for each cell), a cell monitoring board is installed in the module, which allows to monitor any individual cell and the system as a whole. The system is monitored via a web interface for each of the two tiers.

Chemical composition of cells (cathode is based on lithium-iron-phosphate), of which the battery modules are made up, allows the discharge process to be carried out with a current of up to 2C, where C is the capacity of the entire system, in the temperature range from -20 to +55 ° C, which, in turn, provides the opportunity to run HAV without switching on the heating system at subzero temperatures. To carry out charging (up to 1C) in the temperature range below 0 °C, the battery provides a heating system for modules and, accordingly, cells formed by heating mats located between the modules. The heating is activated during charging, when an external current source is connected, which avoids the need for additional batteries.

The claimed traction battery based on lithium-iron-phosphate cells is used as an energy source for unmanned HAVs.

The claimed technical solution meets the requirement of industrial applicability, and it is possible to use the claimed solution in any ground unmanned HAV.

## Claims

1. traction battery for unmanned highly automated vehicles containing
a housing with series-connected modules;
a heating system formed by heating mats located between the modules;
wherein the modules are arranged in two tiers in the housing, and each module is formed by series-connected lithium-iron-phosphate battery cells electrically isolated from each other;
and the housing contains a monitoring system consisting of temperature sensors installed on each module, a humidity sensor, voltage meters for each cell in the module, a current sensor, and upper and lower power modules.
